# EUROPEAN PATENT SPECIFICATION

(11) **EP 2 372 208 B1**
(45) Date of publication and mention of the grant of the patent: **29.05.2013**
(21) Application number: 10157693.2
(22) Date of filing: 25.03.2010
(51) Int. Cl.: F16L 15/04, E21B 17/08

(54) **Threaded joint with elastomeric seal flange**
Gewindeverbindung mit elastomerischem Dichtflansch
Joint fileté avec bride de joint élastomère

(43) Date of publication of application: 05.10.2011
(73) Proprietor: Tenaris Connections Limited, Kingstown (VC)
(72) Inventor: Della Pina, Giuseppe, 24048, TREVIOLO (IT); Ravanelli, Stefano, 40143, BOLOGNA (IT)
(74) Representative: Cinquantini, Bruno

(56) References cited:
- EP-A1- 0 994 287
- DE-U- 1 993 004
- US-A- 2 825 584
- US-A1- 2006 006 600

## Description

### Field of the invention

The present invention relates to threaded joints, in particular for connecting tubes of commercial length to make strings of appropriate length used in the hydrocarbon industry, especially for use in wells for exploiting hydrocarbon fields.

### Background of the invention

Searching for oil or more generally hydrocarbons has become more demanding in terms of hardware and devices in recent years because oil and gas fields or reservoirs are located deeper or in places more difficult to reach than in the past and below the sea bottom. Prospecting for and exploitation of hydrocarbon fields makes it necessary to use hardware in environments where the external pressure of fluid, e.g. marine water, may create a seepage through the connection into the pipe itself. Need for improving seal ability of the joints is generally felt and various types of seals have been developed.

Threaded joints are generally provided with metal-to-metal seals generated by the contact between two surfaces, usually placed at one or at both ends of the threaded portions of pin and box, interfering in the elastic range of the modulus of elasticity for an appropriate stress magnitude. However in specific applications, also resilient seals are needed instead of or in combination with metallic seals, to better prevent penetration of external fluids in the interstices of the threads and, worse, within the pipe itself.

Some prior art documents are known which disclose elastomeric sealing rings, e.g. US20060006600A1, WO02068854, WO0229290, JP07139666, among others. However the seals disclosed in these documents still leave an unresolved operative problem during joint assembly.

While the so-called mill-end of the threaded joint is assembled at the mill with precision, because there is time and tools enough to ensure proper positioning of the sealing rings, on the contrary the so-called field end needs to be assembled and made up in the rig, with many technical limitations. The presence of an additional element, namely a sealing ring, adds complexity to the running operation. In many cases, operators have no indication on whether the sealing ring is properly placed. A wrong positioning or assembling of the sealing ring in its seat entails a failure in its sealing function which could lead to a failure of the whole joint, e.g. by loss of liquid or of gas tightness, or by corrosion.

Sealing rings of the prior art are designed to be completely housed in a space between pin and box and the space to house them can be shaped as grooves machined in the threaded portion of the joint. This solution may create problems of make up with the possible extrusion of the seal ring in the thread with prejudice to the accuracy of the make up and to the tightness of joint. In some cases the sealing rings can be housed within a cavity made internally between the pin and box by partly excavating the walls of the pin and box. This solution, while it provides the advantage of protecting the sealing ring from mechanical damages during make up, on the other side makes it difficult for the operator to check if the sealing ring has reached a correct positioning.

DE-U-1993004 discloses a joint having the features of the preamble of claim 1.

It has a sealing sleeve made partly of a rigid material which functions as abutment ring for pin and box.

### Summary of the invention

It is therefore a main object of the present invention to provide a threaded joint which overcomes the aforementioned drawbacks by means of an innovative annular seal flange ensuring both a simple and secure initial make-up operation, a high sealing efficiency during operation and a visual indication of the position of the sealing flange.

The above mentioned objects are achieved in accordance with the present invention by means of a threaded joint According to claim 1.

The novel combination of features of the invention contributing to the improvement of the threaded joint are the annular portion of the flange, distal with respect to the joint threading, that protrudes out from the end of box member, constituting an indicator that the whole annular sealing flange is properly positioned and the proximal annular portion of smaller radius ensures good positioning and improved tightness.

The particular embodiments of the sealing flange wherein annular protrusions are placed either in the internal or external surfaces of the proximal annular portion ensures increased tightness in particular uses of the threaded joint where higher external pressures are in play. By virtue of these annular protrusions in the presence of a wrapping force equal to that commonly used for state of the art rings, there is produced a concentration of the stresses and higher localized contact pressures caused by the compression of the sealing flange between pin and box, which further enhances sealability of the joint.

The joint can also provide a metal-to-metal sealing surface, placed e.g. at the end of the pin near the annular abutment shoulder at the internal surface of the coupling (or more in general box).

The sealing flange of the invention is advantageously pre-inserted onto the pin, thus avoiding damage of the sealing ring itself during make-up, subsequently the pin is inserted into the box and made up.

The sealing ring of the invention ensures tightness to the external pressure to the joint, even when one of the other sealing functions might singularly be overcome by the external fluid. After make up is completed, the proximal annular portion of the sealing flange is retained in its annular housing made between the inner surface of the box and the outer surface of the pin. The external fluid pressure further increases the retaining forces on the whole sealing ring.

The surface of this housing can also be provided with a finishing and a coating layer, if necessary. The coating also protects the machined surface of both pin and box. The housing geometry is especially configured to co-operate together with both proximal and distal annular portions of the sealing flange. The provision of a coating on the sealing contact surfaces of either pin and box ensures better adhesion in the housing, of the seal devices.

### Brief description of the drawings

The foregoing and other objects will become more readily apparent by referring to the following detailed description and the appended drawings in which:
Figure 1 shows a section view on a longitudinal axial plane of the joint in accordance with the present invention;
Figure 2 shows a section view on a longitudinal axial plane of an enlarged detail of the joint of Fig. 1;
Figure 3 shows a section view on a longitudinal axial plane of another embodiment of an enlarged detail of the joint of Fig. 1;
Figure 4 shows a section view on a longitudinal axial plane of still another embodiment of an enlarged detail of the joint of Fig. 1;
Figure 5 shows an enlargement of the particular indicated with X of fig. 4;
Figure 6 shows an enlargement of the particular indicated with Y of fig. 4.

### Detailed description of preferred embodiments of the invention

With particular reference to the indicated figures, there is shown a threaded joint indicated globally with reference numeral 1, connecting two tubes, a male tube, or pin 3, with an external nominal diameter D, and a female tube or box 2 of external diameter D1, e.g. a coupling, or a box, more generally. The tubes are made of high strength steel or alloy steel,

The pin 3 has a threaded portion 8 with male threads of appropriate profile, e.g. trapezoidal, whereas the coupling 2 has an internal threaded portion 7 with female thread mating with the male threading of the pin 3. The common axis of the tubes, pin 3 and box 2 is indicated with A.

The portion of the box 2 close to its nose 9 has an internal non-threaded surface 11. This surface 11 is at a pre-determined radial distance from the outer surface 12 of the pin 3 leaving an annular space sufficient to accommodate the elastomeric annular sealing flange 4.

Advantageously, but not necessarily, a housing 10 in the shape of an annular groove is made on the internal surface of the box 2 comprised between the end of the thread 7 and the box nose 9. This housing 10 accomodates the sealing flange 4. The housing 10, made in the internal surface of box 2, has preferably a cylindrical surface, but alternatively it can have also a frusto-conical surface with a slight taper, ranging from 2 to 6 %, towards the threading 7 of box 2.

The sealing flange 4 has a body which can be distinguished in two main annular portions, the first annular portion 6, when mounted on the joint 1 is distal in respect of the box threading 7 and remains outside the space comprised between pin and box, while the second annular portion 5 is proximal in respect of the box threading 7 and remains internally to the space comprised between pin and box. The first 6 and the second 5 annular portions are integral one to each other, and made in one piece of material, and give a substantially L-shaped section to the sealing flange 4 when observed on an axial section plane.

The sealing flange 4, in operation, is inserted on the pin external surface 12, at a point close to the place where the housing 10 will locate after make up is completed. After the joint is made up close to the final positioning of the pin 3 in the box 2, the nose 9 of the box 2 will engage the proximal annular portion 5 of the sealing flange 4 so that the portion 5 enters into the housing 10 and the peripheral surfaces of the housing 10 will compress elastically the surfaces 15 and 16 of the portion 5, producing an enhanced sealing effect since the nominal distance between external and internal surfaces 15 and 16 of the flange 4 (in the radial direction), in unloaded position is larger than the radial distance of the housing 10 between surfaces 11 and 12.

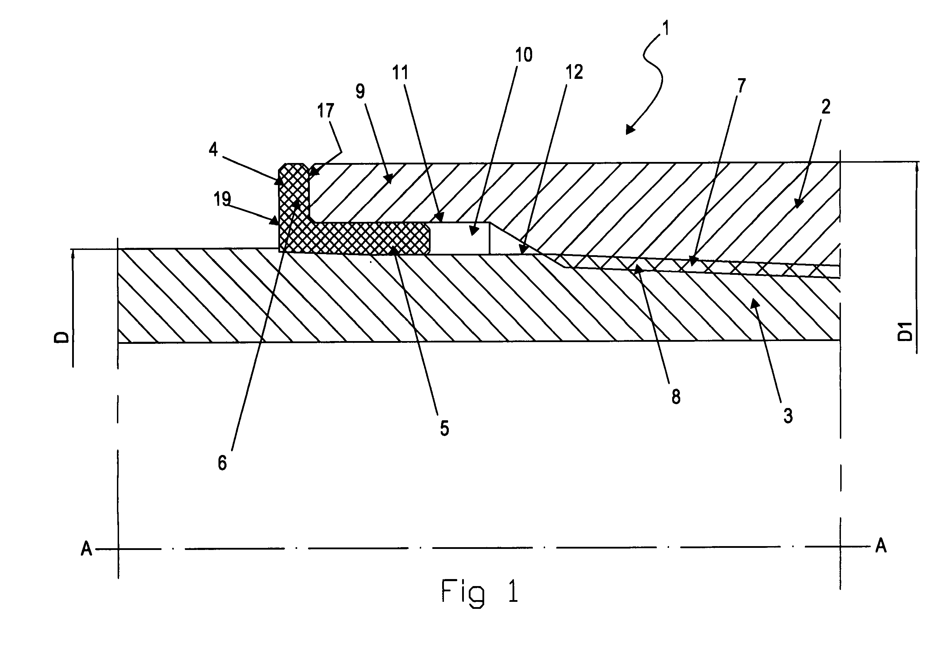

Progressing further with make up operation of the joint 1, the end surface 17 of the box nose 9 enters in contact with the surface 13 of the annular portion 6 of the sealing flange 4 and displaces the whole sealing flange 4 along the pin external surface 12 until make up is completed, e.g. when the abutment shoulders provided in the joint (not shown in the figures, as they generally are designed outside the joint portion to which Fig. 1 refers) arrive in contact.

Since surface 14 of the annular portion 6 of the sealing flange 4 remains always in sight of the operator during the whole make up operation of the joint it is possible to check whether the sealing ring is misplaced during the operation. Moreover the contact between the surface 13 of the sealing flange 4 and the end surface 17 of the box nose 9 ensures a good positioning of the sealing flange 4 in the housing 10.

The front or external portion 6 of the sealing flange 4 contributes also to further increasing the sealing function since the external fluid pressure acts on the external surface 14 of the flange 4 which remains outside the housing 10 and deforms itself to stick against the surfaces 11 and 12 and adjacent to it.

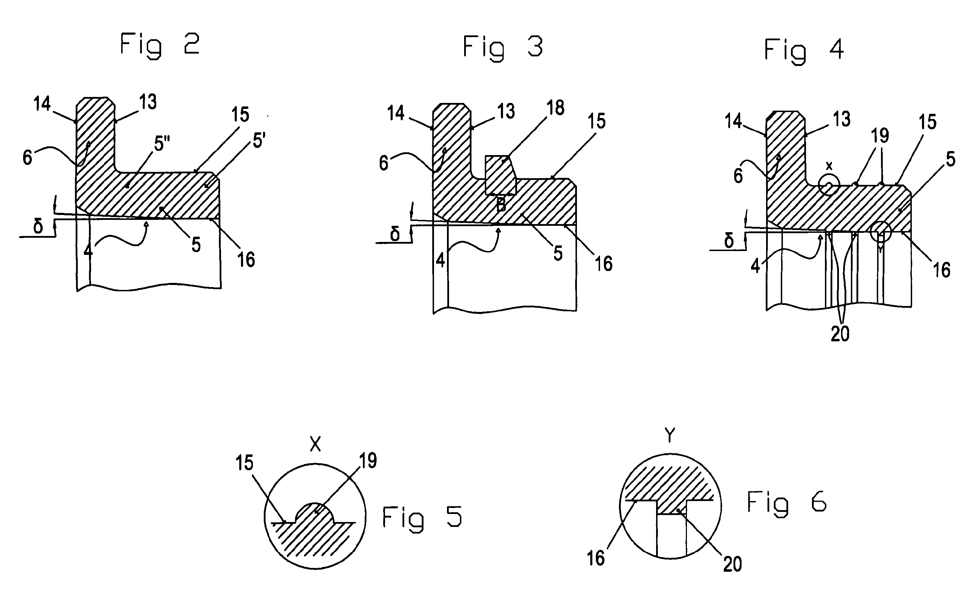

Several, non limitative, embodiments are provided for the sealing flange 4 which are shown in particular in the Figures 2 to 6, which show various shapes for the proximal annular portion 5 of the sealing flange 4.

The embodiment of fig. 2 provides for an annular portion 5 further divided into a first sub-portion 5', which have annular external and internal surfaces parallel to each other, and a second sub-portion 5" which have external and internal surfaces convergent towards each other by an angle δ of small value, preferably comprised in the range from 1° to 10°, tapering towards the portion 6 of the sealing flange 4. The embodiment of Fig. 3 has a basic structure like the one of Fig. 2 and additionally has externally a coaxial annular protrusion 18, which has a length B in section at the base of the protrusion 18 comprised in the range from 0,5mm to 3 mm and of appropriate radial dimension to produce sufficient additional sealing capacity.

The embodiment of the sealing flange 4 shown in Fig. 4 has a plurality of smaller annular protrusions 19 on the external surface 15 of the sealing flange 4 and for several small annular protrusions 20 on the internal surface 16 of the sealing flange 4. The radial dimensions of all protrusions are also appropriately chosen to provide the necessary sealing capacity to the flange 4.

The annular protrusions 19 of the external surface 15 of the embodiment of fig. 4 are shown in an axial section in an enlarged view in Fig. 5. The annular protrusions 20 of the internal surface 16 are shown in an enlarged view in Fig. 6. It is appreciated by a person skilled in the art that the sectional shapes of the annular protrusions 19 and 20 shown in figures 5 and 6 can be inverted and the shape indicated for the external protrusions can be used for the protrusions of the internal protrusions and vice-versa.

Likewise both protrusions used on the external surface or on the internal surface of the sealing can be made with the same sectional shape. This embodiment is not shown in the figures.

These protuberances 18, 19, 20 improve sealing effectiveness of the whole sealing flange 4 and behave as multiple small O-rings, contributing further to improve tightness between seal flange and the interior surface of the box 2 and external surface of the pin 3.

The sealing flange 4 can be made of various elastomeric / polymeric materials, e.g. PTFE charged with e.g. by fibreglass ; graphite ; MoS02 .etc.

The joint 1 defines an inner duct, containing the axis A of pin 3 and box 2, in which a fluid, for example a hydrocarbon, such as natural gas, or petroleum or other similar fluid, flows and an outer space 8 which can be in contact with fluids of various kinds such as sea water in specific applications. The sealing flange 4 offers an additional sealing capacity to the joint 1 which prevents external fluids present outside the joint from introducing into the interstices of the threads of the joint.

The method of mounting the joint with the sealing flange 4 in accordance with the invention is as follows. Prior to the make-up of the connection, the sealing flange 4 is pre-mounted onto the pin 3 beyond the threaded portion 8 and placed on the unthreaded surface 12. The following step provides for the make up of pin and box during which there may occur a turning around the axis A of the sealing flange 4, already in place before inserting the pin in the box, caused by the friction contact of the flange with the internal surface 11 of the housing 10. The fact that the flange 4 is already in place on a non-threaded portion of the pin 3 avoids damage of the sealing flange 4, which is an advantage in respect of the case when a sealing ring has a contact of its internal surface with the pin threaded portion. Moreover when the make-up operation of the joint comes closer to the end, the sealing flange 4 is also slightly pushed by the abutment 17 of the box nose 9 on the surface 13 to its final position. In this last part of the make up, the sealing flange 4 is pushed against the final rest surface, thereby gradually further increasing adherence of the sealing flange 4 on the pin 3 in the housing 10. After the sealing flange 4 enters into the housing 10 on the box 2, the flange 4 does not slide anymore in an axial direction, although in some cases when the joint has reached the final level of make up the flange 4 slides slightly only in a direction around the joint axis A, under either internal or external pressures, but remains restrained by the walls of the housing 10 and substantially motionless.

When the joint 1 has reached its final made up position, e.g. because the abutment shoulders of pin and box have reached their mutual contact, the sealing flange 4 assumes its final geometry and reaches its final design stresses and deformations.

The sealing flange 4 gives the threaded joint also the advantage of a capability to offer successive barriers to leaks.

The joint of the invention may also have an internal metal-to-metal seal near the nose of the pin. This embodiment is not shown in the figures as this portion of the joint is not illustrated.

Optimal sizes of the flange 4 are :
Internal diameter (ID) :as per the pin D4 diameter
Wall thickness of the portion 5 (Wt) :under coupling : from 2 to 8 mm
Outer diameter of portion 6 (OD) : preferably it has the same diameter as the connection OD.

The joint of the invention is to be used preferably in the field of OCTG and pipeline connections for the oil & gas industry, especially in offshore applications.

## Claims

1. Threaded joint for the hydrocarbon industry, defining an axis (A) comprising a male tube with external male threads (8), defined as the pin (3), and a female tube with internal female threads (7), defined as the box (2), and a sealing flange (4), the pin (3) being adapted to be made up in the box (2), wherein a housing (10) is provided between an external surface (12) of the pin (3) and an internal surface (11) of a box nose (9), wherein the sealing flange (4) comprises a first annular portion (5) proximal to the box threads (7) and a second annular portion (6) distal to the box threads (7), wherein the housing (10) accommodates the first proximal portion (5) of the sealing flange (4) and the second annular portion (6) is accommodated in abutment to an end surface (17) of the box nose (9), wherein the second annular portion (6) protrudes out from the end of box member, **characterised in that** the surface (14) of the second annular portion (6) which is distal to the box threads (7) remains always in sigh of the operator during the whole make up operation of the joint, the second annular portion (6) remains outside the space comprised between pin and box, whereby when make up is completed a contact exist between the surface (13) of the second annular portion (6) of the sealing flange (4) proximal to the box threads (7) and the end surface (17) of the box nose (9) but fluid pressure external to the joint acts on the surface (14) of the second annular portion distal to the box threads (7), and **in that** the first (6) and the second (5) annular portions are integral one to each other, and made in one piece of material.

2. Threaded joint according to claim 1, wherein the sealing flange (4) has an L-shaped section on a plane laying on the axis (A) of the joint (1).

3. Threaded joint according to claim 2, wherein the sealing flange (4) has at least one annular protrusion (18, 19) on the external surface (15) of the proximal annular portion (5).

4. Threaded joint according to claim 3, wherein the sealing flange (4) has at least one annular protrusion (20) on the internal surface (16) of the proximal annular portion (5).

5. Threaded joint according to any preceding claim, wherein the first annular portion (5) of the sealing flange (4) comprises an internal surface at least partially tapered with respect to the external surface (15) with a taper angle (δ) comprised between 2 and 6 %.

## Patentansprüche

1. Gewindeverbindung für die Kohlenwasserstoffindustrie, die eine Achse (A) definiert, die ein positives Rohr mit positivem Außengewinde (8), das als der Stutzen (3) definiert ist, und ein negatives Rohr mit negativem Innengewinde (7), das als die Muffe (2) definiert ist, und einen Dichtungsflansch (4) umfasst, wobei der Stutzen (3) zur Aufnahme in der Muffe (2) ausgebildet ist, wobei ein Gehäuse (10) zwischen einer Außenfläche (12) des Stutzens (3) und einer Innenfläche (11) einer Muffennase (9) vorgesehen ist, wobei der Dichtungsflansch (4) einen ersten ringförmigen Abschnitt (5) proximal zu dem Muffengewinde (7) und einen zweiten ringförmigen Abschnitt (6) distal von dem Muffengewinde (7) umfasst, wobei das Gehäuse (10) den ersten proximalen Abschnitt (5) des Dichtungsflansches (4) aufnimmt, und der zweite ringförmige Abschnitt (6) in Anlage an einer Endfläche (17) der Muffennase (9) aufgenommen ist, wobei der zweite ringförmige Abschnitt (6) aus dem Ende des Muffenelements herausragt,
**dadurch gekennzeichnet, dass**
die Fläche (14) des zweiten ringförmigen Abschnitts (6), die distal von dem Muffengewinde (7) ist, während des gesamten Montagevorgangs der Verbindung immer im Blick des Bedieners bleibt, wobei der zweite ringförmige Abschnitt (6) außerhalb des zwischen Stutzen und Muffe enthaltenen Raums bleibt, wodurch, wenn die Montage abgeschlossen ist, ein Kontakt zwischen der Fläche (13) des zweiten ringförmigen Abschnitts (6) des Dichtungsflansches (4) nahe bei dem Muffengewinde (7) und der Endfläche (17) der Muffennase (9) vorhanden ist, aber Fluiddruck außerhalb der Verbindung auf die Fläche (14) des zweiten ringförmigen Abschnitts distal von dem Muffengewinde (7) wirkt, und dass der erste (6) und der zweite (5) ringförmige Abschnitt einstückig miteinander sind und aus einem Materialstück hergestellt sind.

2. Gewindeverbindung nach Anspruch 1,
wobei der Dichtungsflansch (4) einen L-förmigen Querschnitt auf einer Ebene, die auf der Achse (A) der Verbindung (1) liegt, aufweist.

3. Gewindeverbindung nach Anspruch 2,
wobei der Dichtungsflansch (4) zumindest einen ringförmigen Vorsprung (18, 19) auf der Außenfläche (15) des proximalen ringförmigen Abschnitts (5) aufweist.

4. Gewindeverbindung nach Anspruch 3,
wobei der Dichtungsflansch (4) zumindest einen ringförmigen Vorsprung (20) auf der Innenfläche (16) des proximalen ringförmigen Abschnitts (5) aufweist.

5. Gewindeverbindung nach einem der vorhergehenden Ansprüche, wobei der erste ringförmige Abschnitt (5) des Dichtungsflansches (4) eine Innenfläche umfasst, die zumindest teilweise mit Bezug auf die Außenfläche (15) mit einem Schrägungswinkel (δ) abgeschrägt ist, der zwischen 2 und 6 % umfasst.

## Revendications

1. Raccord fileté pour l'industrie des hydrocarbures, définissant un axe (A) comprenant un tube mâle avec des filetages mâles externes (8), défini en tant que la tige (3), et un tube femelle avec des filetages femelles internes (7), défini en tant que le boîtier (2), et une bride d'étanchéité (4), la tige (3) étant apte à être constituée dans le boîtier (2), dans lequel un logement (10) est fourni entre une surface externe (12) de la tige (3) et une surface interne (11) d'un nez de boîtier (9), dans lequel la bride d'étanchéité (4) comprend une première portion annulaire (5) proximale des filetages de boîtier (7) et une deuxième portion annulaire (6) distale des filetages de boîtier (7), dans lequel le logement (10) accueille la première portion proximale (5) de la bride d'étanchéité (4) et la deuxième portion annulaire (6) vient en butée contre une surface d'extrémité (17) du nez de boîtier (9), dans lequel la deuxième portion annulaire (6) fait saillie hors de l'organe d'extrémité de boîtier, **caractérisé en ce que** la surface (14) de la deuxième portion annulaire (6) qui est distale des filetages de boîtier (7) reste toujours à la vue de l'opérateur au cours de l'opération de constitution complète du raccord, la deuxième portion annulaire (6) reste à l'extérieur de l'espace compris entre la tige et le boîtier, de telle manière que, à la fin de la constitution, il existe un contact entre la surface (13) de la deuxième portion annulaire (6) de la bride d'étanchéité (4) proximale des filetages de boîtier (7) et la surface d'extrémité (17) du nez de boîtier (9) mais une pression de fluide à l'extérieur du raccord agit sur la surface (14) de la deuxième portion annulaire distale des filetages de boîtier (7), et **en ce que** la première portion annulaire (6) et la deuxième portion annulaire (5) font partie intégrante l'une de l'autre, et sont constituées dans une seule pièce de métal.

2. Raccord fileté selon la revendication 1, dans lequel la bride d'étanchéité (4) a une section en forme de L dans un plan reposant sur l'axe (A) du raccord (1).

3. Raccord fileté selon la revendication 2, dans lequel la bride d'étanchéité (4) comporte au moins une protubérance annulaire (18, 19) sur la surface externe (15) de la portion annulaire proximale (5).

4. Raccord fileté selon la revendication 3, dans lequel la bride d'étanchéité (4) comporte au moins une protubérance annulaire (20) sur la surface interne (16) de la portion annulaire proximale (5).

5. Raccord fileté selon l'une quelconque des revendications précédentes, dans lequel la première portion annulaire (5) de la bride d'étanchéité (4) comprend une surface interne au moins partiellement effilée par rapport à la surface externe (15) avec un angle d'effilement (δ) compris entre 2 et 6 %.
